# EUROPÄISCHE PATENTSCHRIFT

(11) **EP 1 329 376 B1**
(45) Veröffentlichungstag und Bekanntmachung des Hinweises auf die Patenterteilung: **25.10.2006**
(21) Anmeldenummer: 03000768.6
(22) Anmeldetag: 14.01.2003
(51) Int. Cl.: B62D 25/14

(54) **Schalttafelanordnung für ein Kraftfahrzeug**
Arrangement of the dashboard of a motor vehicle
Agencement de tableau de bord de véhicule automobile

(30) Priorität: 22.01.2002 DE 10202169
(43) Veröffentlichungstag der Anmeldung: 23.07.2003
(73) Patentinhaber: Dr.Ing. h.c.F. Porsche Aktiengesellschaft, 70435 Stuttgart (DE)
(72) Erfinder: Kuhlmann, Rainer, 74321 Bietigheim-Bissingen (DE)

(56) Entgegenhaltungen:
- FR-A- 2 725 404
- FR-A- 2 796 577
- US-A- 5 979 965

## Beschreibung

Bei der Erfindung wird ausgegangen von einer Schalttafelanordnung für ein Kraftfahrzeug, gemäß Oberbegriff des Anspruchs 1.

Eine derartige Schalttafelanordnung für ein Kraftfahrzeug ist aus der WO 97/49599 A1 bekannt. Diese Schalttafelanordnung besitzt ein Schalttafelunterteil sowie ein Schalttafeloberteil, zwischen denen ein erster und zweiter Luftführungskanal ausgebildet sind. Diese Luftführungskanäle erstrecken sich zumindest abschnittsweise etwa in Fahrzeugquerrichtung und verlaufen wenigstens bereichsweise parallel zueinander, wobei sie in ihrem parallelen Bereich durch eine Kanalwand voneinander getrennt sind. Der erste und zweite Luftführungskanal führen entsprechend zu ersten und zweiten Luftauslässen, die im Bereich von seitlichen Enden der Schalttafelanordnung liegen, welche Enden der Schalttafelanordnung benachbart zum seitlichen Aufbau, beispielsweise A-Säulen, liegen. Nachteilig bei dieser bekannten Schaltafelanordnung ist der realtiv große Platzbedarf der nebeneinander bzw. - in Fahrtrichtung gesehen - hintereinander angeordneten Luftführungskanäle.

Aufgabe der Erfindung ist es, eine Schalttafelanordnung der eingangs genannten Art für ein Kraftfahrzeug anzugeben, die kompakt aufgebaut ist.

Gelöst wird diese Aufgabe mit einer Schalttafelanordnung für ein Kraftfahrzeug, die die in Anspruch 1 genannten Merkmale aufweist. Weitere, die Erfindung ausgestaltende Merkmale enthalten die Unteransprüche.

Die mit der Erfindung hauptsächlich erzielten Vorteile sind darin zu sehen, dass durch die Fortführung des zweiten Luftführungskanals innerhalb des ersten Luftführungskanals beispielsweise im Bereich der Enden der Schalttafelanordnung diese eine kompakte Bauweise aufweist. Die ersten und zweiten Luftauslässe können außerdem möglichst nahe an die seitlichen Enden der Schalttafelanordnung herangeführt sein, so dass beispielsweise die zweiten Luftauslässe sehr nahe zu Seitenscheiben des Kraftfahrzeugs liegen, wodurch deren Luftbeaufschlagung effektiv und direkt erfolgen kann, um so ein Beschlagen dieser Seitenscheiben zu vermeiden. Durch die Fortführung des zweiten Luftkanals in dem ersten Luftkanal wird außerdem zusätzlicher Einbauraum für Anbau- bzw. Ausstattungsteile in der Schalttafelanordnung gewonnen.

Besonders bevorzugt wird ein Ausführungsbeispiel mit den in Anspruch 2 genannten Merkmalen. Dadurch, dass jeweils separate Kanäle einerseits für die Innenraumbelüftung des Fahrzeugs und andererseits für das Luftbeaufschlagen der Fahrzeugscheiben vorgesehen sind, können diese Luftführungskanäle mit unterschiedlich konditionierter Luft versorgt werden. Einerseits kann so besonders aufbereitete Luft für die Beaufschlagung der Fahrzeugscheiben an diese geleitet werden, beispielsweise zur Vermeidung des Beschlagens, und andererseits kann eine für Fahrzeuginsassen komfortable Belüftung des Innenraums erfolgen.

Nach einer Weiterbildung mit den in Anspruch 3 genannten Merkmalen wird durch die Ausbildung des Belüftungskanals mit einem Bogenabschnitt und die Anordnung des Kanalfortsatzes in dem Bogenabschnitt des Belüftungskanals ein verhältnismäßig großer Einbauraum an der Fahrer bzw. Beifahrerseite bereit gestellt, der beispielsweise eine Instrumententafel, ggf. mit Anzeigeeinrichtungen, oder einen Handschuhkasten, eine Sicherheitseinrichtung oder andere Ein- bzw. Anbauteile aufnimmt.

Besonders bevorzugt wird ein Ausführungsbeispiel gemäß Anspruch 4, bei dem der Kanalfortsatz durch ein Einlegeteil gebildet ist, welches in den ersten Luftführungskanal eingesetzt wird, was eine einfache und kostengünstige Montage ermöglicht. Die aus der in der Kanalwand vorgesehene Luftdurchtrittsöffnung ausströmende Luft wird mithin über das Einlegeteil zu dem zweiten Luftauslass geführt.

Besonders einfach lässt sich der Kanalfortsatz mit dem Einlegeteil realisieren, wenn der zweite Luftführungskanal in dem Schalttafelunterteil - wie in Anspruch 5 angegeben - durch U-förmige oder nach einer Alternative durch rinnenartige Kanalelemente gebildet wird, die an ihrer dem Schalttafeloberteil zugewandten Seite offen sind. Nach dem Einsetzen des Einlegeteils werden die Luftführungskanäle durch das Schalttafeloberteil abgedeckt bzw. verschlossen.

Liegt die Luftdurchtrittsöffnung - entsprechend Anspruch 6 - etwa im Übergangsbereich zwischen dem parallel zur Fahrzeugquerrichtung verlaufenden Abschnitt und dem Bogenabschnitt des ersten Luftführungskanals, so kann dieser erste Luftführungskanal mit seinem Bogenabschnitt nahe an das seitliche Ende der Schalttafelanordnung herangeführt und das Einlegeteil in dem Bogenabschnitt angeordnet werden, wodurch sich im Bereich dieses Bogenabschnittes eine Übereinanderanordnung des ersten und zweiten Luftführungskanals ergibt und demnach die ersten und zweiten Luftauslässe im Bereich der seitlichen Enden der Schalttafelanordnung übereinander angeordnet sind.

Bevorzugt wird nach Anspruch 7 eine Ausführungsvariante, bei der der seitliche Defrostauslass auf der Oberseite und der Seitenauslass auf der dem Fahrgastraum zugewandten Stirnseite der Schalttafelanordnung liegt, wodurch ein direktes Anblasen der Fahrzeuginsassen aus den seitlichen Belüftungsauslässen vermieden wird und dennoch eine wirkungsvolle Luftbeaufschlagung von den Defrostauslässen auf die Seitenscheiben des Fahrzeugs erfolgen kann.

Die Erfindung wird nachfolgend anhand von Ausführungsbeispielen mit Bezug auf die Zeichnung näher erläutert.

Es zeigen:
- Fig. 1: eine perspektivische Teilansicht eines Kraftfahrzeugs,
- Fig. 2: in Explosionsdarstellung eine Schalttafelanordnung für das Kraftfahrzeug und
- Fig. 3: einen Schnitt entlang der Linie III - III der Schalttafelanordnung nach Fig. 2.

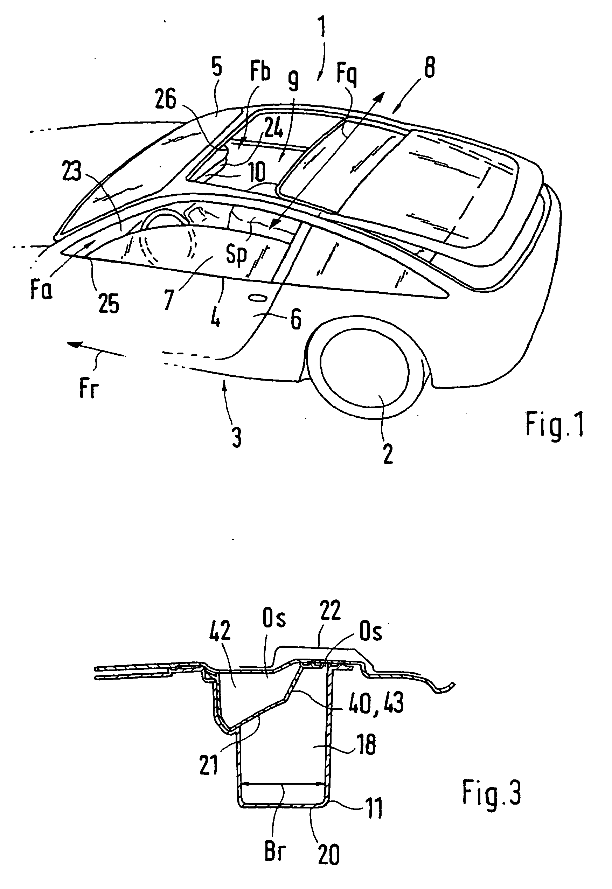

In Fig. 1 is ein Kraftfahrzeug 1, insbesondere Personenwagen, dargestellt, welches einen von Rädern 2 getragenen Aufbau 3 aufweist. Oberhalb einer Gürtellinie 4 besitzt das Kraftfahrzeug 1 eine auch als Windschutzscheibe bezeichnete Frontscheibe 5 und an Seitentüren 6 angeordnete Seitenscheiben 7. Selbstverständlich ist es auch möglich, das Kraftfahrzeug mit mehr als zwei Seitentüren 6 auszustatten, die ebenfalls Seitenscheiben tragen können. Ferner ist der Aufbau 3 oberhalb der Gürtellinie 4 mit einem Fahrzeugdach 8 ausgestattet, das fest oder beweglich zum Öffnen bzw. Verschließen des Dachs ausgebildet sein kann. Außerdem umfasst das Kraftfahrzeug einen Fahrzeuginnenraum 9, in dem Sitzplätze Sp angeordnet sind. In Fahrtrichtung Fr vor den Sitzplätzen Sp ist in an sich bekannter Weise eine Schalttafelanordnung 10 in dem Innenraum 9 angeordnet, die am Aufbau 3 befestigbar ist.

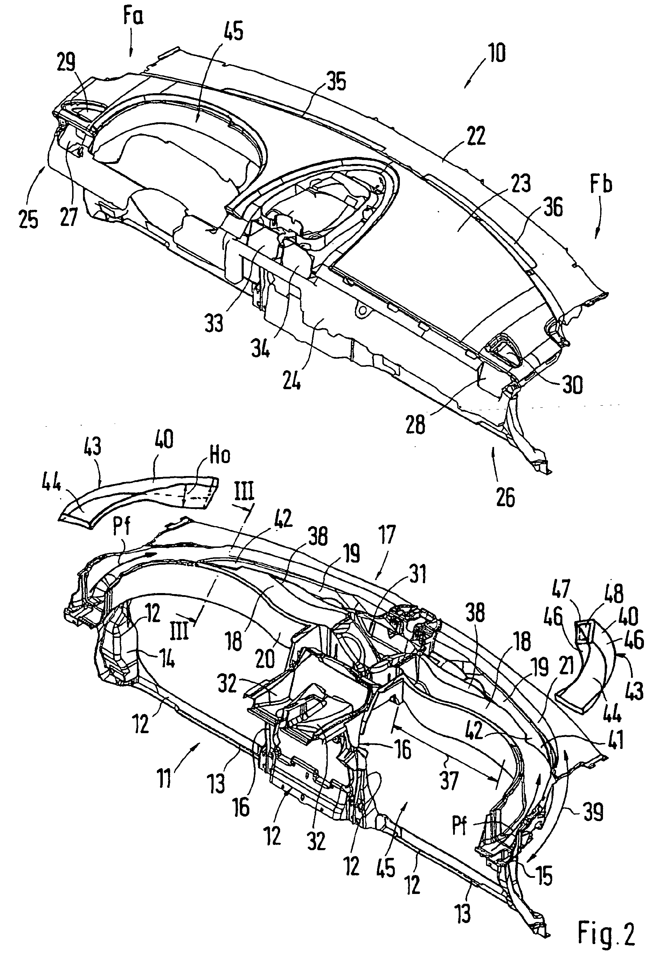

Die Schalttafelanordnung 10 besitzt beispielsweise ein aus Kunststoff einteilig hergestelltes Schalttafelunterteil 11 (Fig. 2), welches auch als Schalttafelträger bezeichnet werden kann. An dem Schalttafelunterteil 11 kann ein Befestigungsträger 12 für beispielsweise ein Heizungs- und/oder Klimagerät bzw. einen Lüfter (nicht dargestellt) ausgebildet sein. Selbstverständlich können weitere Befestigungsträger 12 für weitere Anbauteile, wie beispielsweise Innenausstattungsteile oder Insassenschutzeinrichtungen vorgesehen sein. Für das Befestigen der eben erwähnten Anbauteile besitzt das Schalttafelunterteil 11 vorzugsweise eine rahmenartige Ausgestaltung mit unteren Querstreben 13 und mit diesen verbundene aufrechte äußere Streben 14 und 15 sowie wenigstens eine Mittelstrebe 16. An die Streben 14, 15 und 16 schließt sich ein oberes Querteil 17 mit Abstand zu den unteren Querstreben 13 an. An dem Schalttafelunterteil 11, insbesondere im Bereich des Querteils 17, sind wenigstens ein erster und zweiter Luftführungskanal 18, 19 für jede Fahrzeugseite Fa und Fb ausgebildet, die durch - im Querschnitt gesehen - etwa U-förmige (Fig. 3) bzw. rinnenartige Kanalelemente 20 bzw. 21 gebildet sind, deren obere offene Seite Os von einem Schalttafeloberteil 22 abgedeckt bzw. verschlossen ist, so dass der erste und zweite Luftführungskanal 18 und 19 zwischen dem Schalttafelunterteil 11 und dem Schalttafeloberteil 22 zu liegen kommen.

Das beispielsweise mehrteilige und ggf. aus Kunststoff hergestellte Schalttafeloberteil 22 besitzt einen etwa in Richtung zur Frontscheibe 5 orientierten etwa waagrechten Abschnitt, der eine Oberseite 23 der Schalttafelanordnung 10 bildet. Ferner umfasst das Schalttafeloberteil 22 einen heruntergezogenen Abschnitt, der dem Fahrzeuginnenraum 9 bzw. den Sitzplätzen Sp zugewandt ist und so eine Stirnseite 24 der Schalttafelanordnung 10 bildet. In der Schalttafelanordnung 10 sind im Bereich ihrer seitlichen Enden 25 und 26 Luftauslässe vorgesehen, wobei zu diesen ersten auch als Seitenauslässe bezeichneten Luftauslässen 27 und 28 der jeweils der erste Luftführungskanal 18 und zu zweiten Luftauslässen 29 und 30 der jeweils zweite Luftführungskanal 19 führt. Die jeder Fahrzeugseite Fa und Fb zugeordneten ersten und zweiten Luftführungskanäle 18 und 19 können beispielsweise von einem etwa mittig in dem Schalttafelunterteil 11 angeordneten Luftverteiler 31 ausgehen, der insbesondere von dem Heizungs- und/oder Klimagerät bzw. Lüfter versorgt wird. Überdies können von dem Luftverteiler 31 dritte Luftführungskanäle 32 ausgehen, die zu dritten Luftauslässen 33 und 34 führen, die insbesondere als sog. Mittenauslässe angeordnet sind. Die ersten Luftauslässe 27 und 28 sowie die dritten Luftauslässe 33 und 34 dienen insbesondere der Belüftung bzw. Konditionierung des Fahrzeuginnenraums 9 und bilden daher Belüftungsauslässe für den Bereich des Fahrzeuginnenraums 9, den Fahrzeuginsassen einnehmen. Die ersten und dritten Luftführungskanäle 18 und 32 sind daher Belüftungskanäle für den Fahrzeuginnenraum 9 und können von dem Heizungs- und/oder Klimagerät bzw. Lüfter separat versorgt werden. Die zweiten Luftführungskanäle 19 werden als Defrostkanäle genutzt, die vorzugsweise ebenfalls von dem Heizungsund/oder Klimagerät bzw. Lüfter separat versorgbar sind, um beispielsweise speziell konditionierte Luft an den auch als Defrostauslässen bezeichneten zweiten Luftauslässen 29 und 30 für die Luftbeaufschlagung der Fahrzeugscheiben 7 bereit zu stellen, wodurch deren Beschlagen vermieden oder beseitigt wird. Für die Defrost-Luftbeaufschlagung der Frontscheibe 5 können außerdem vierte Defrost- bzw. Luftauslässe 35 und 36 an der Schalttafelanordnung 10 ausgebildet sein, die aus den Defrostkanälen 19 versorgt werden.

Fig. 2 zeigt noch, dass die ersten und zweiten Luftführungskanäle 18 und 19 sich zumindest abschnittsweise - ausgehend von dem Luftverteiler 31 - etwa in Fahrzeugquerrichtung Fq erstrecken und insbesondere in diesem Abschnitt 37 zumindest bereichsweise parallel zueinander und - in Fahrtrichtung Fr gesehen - hintereinander verlaufen, jedoch durch eine Kanalwand 38 voneinander getrennt sind. An den Abschnitt 37 jedes Belüftungskanals 18 schließt sich ein Bogenabschnitt 39 an, der den Belüftungskanal 18 entgegen der Fahrtrichtung Fr fortsetzt. Fig. 2 zeigt außerdem, dass der zweite Luftführungskanal 19, der auch als Defrostkanal bezeichnet wird, etwa im Übergangsbereich zwischen dem Abschnitt 37 und dem Bogenabschnitt 39 in dem Schalttafelunterteil 11 zunächst endet. Damit jedoch die zweiten Luftauslässe 29 und 30 aus dem Defrostkanal 19 versorgt werden können, ist in jedem ersten Luftführungskanal 18 ein Kanalfortsatz 40 ausgebildet, der das Kanalende 41 des Defrostkanals 19 mit dem jeweiligen seitlichen Defrostauslass 29 bzw. 30 verbindet. Somit ist jeder Defrostkanal bzw. zweite Luftführungskanal 19 zumindest abschnittsweise innerhalb des jeweiligen ersten Luftführungskanals 18, insbesondere in dessen Bogenabschnitt 39, fortgeführt und erstreckt sich abschnittsweise demnach - von den zweiten Luftauslässen 29 und 30 aus gesehen - stromaufwärts (Pfeil Pf) vorzugsweise bis in den Abschnitt 37 der Kanäle 18 bzw. 19. Der Kanalfortsatz 40 könnte ggf. bis in den Abschnitt 37 oder bis zu dem Luftverteiler 31 reichen.

Im Übergangsbereich zwischen dem Abschnitt 37 und dem Bogenabschnitt 39 ist in der Kanalwand 38 eine Luftdurchtrittsöffnung 42 ausgebildet, die dem Kanalende 41 zugeordnet ist. An die Luftdurchtrittsöffnung 42 bzw. das Kanalende 41 schließt sich der Kanalfortsatz 40 an, der in bevorzugter Ausführungsform durch ein Einlegeteil 43 gebildet ist, welches beispielsweise rinnenartig ausgeführt sein kann, jedoch zumindest einen Boden 44 aufweist, der im gezeigten Ausführungsbeispiel im Bereich des Bogenabschnitts 39 den ersten Luftführungskanal 18 vom zweiten Luftführungskanal 19 trennt, so dass diese beiden Luftführungskanäle 18 und 19 wenigstens abschnittsweise übereinander bzw. ineinander liegen. Im Abschnitt 37 sind die Kanäle 18 und 19 - in Fahrtrichtung Fr gesehen - hintereinander angeordnet. Durch die bogenartige Führung nach dem Kanalabschnitt 37 und die Übereinanderanordnung der beiden Kanäle 18 und 19 im Bogenabschnitt 39 ergibt sich eine kompakte Bauweise der Schalttafelanordnung 10, in der dadurch ggf. größere Einbauräume 45 für Anbau- bzw. Einbauteile gegeben sind.

Wie beispielsweise aus den Fig. 2 und 3 hervorgeht, kann der Kanalfortsatz 40 bzw. das Einlegeteil 43 einen im Wesentlichen U-förmigen Querschnitt aufweisen. Der Kanalfortsatz 40 bzw. das Einlegeteil 43 können sich bereichsweise oder über die gesamte Breite Br des ersten Luftführungskanals 18 erstrecken. Überdies kann die Höhe Ho der Seitenwände 46 des Einlegeteils 43 stromaufwärts ansteigen. Ferner könnte das Einlegeteil 43 auch wannenartig ausgebildet sein und mit einem Durchlass 48 an die Luftaustrittsöffnung 42 anschließen.

## Patentansprüche

1. Schalttafelanordnung für ein Kraftfahrzeug, die ein Schalttafelunterteil und ein Schalttafeloberteil umfasst, zwischen denen ein erster und zweiter Luftführungskanal ausgebildet sind, welche Kanäle sich zumindest abschnittsweise etwa in Fahrzeugquerrichtung erstrecken und zumindest bereichsweise parallel zueinander verlaufen sowie durch eine Kanalwand voneinander getrennt sind und außerdem zumindest zu im Bereich von seitlichen Enden der Schalttafelanordnung angeordneten ersten und zweiten Luftauslässen führen, **dadurch gekennzeichnet, dass** der zweite Luftführungskanal (19) stromaufwärts (Pfeil Pf) von dem ihm zugeordneten zweiten Luftauslass (29, 30) abschnittsweise innerhalb des ersten Luftführungskanals (18) mit einem Kanalfortsatz (40) fortgeführt ist.

2. Schalttafelanordnung nach Anspruch 1, **dadurch gekennzeichnet, dass** der erste Luftführungskanal (18) einen Belüftungskanal für den Innenraum (9) des Kraftfahrzeugs (1) bildet, dass der erste Luftauslass (27, 28) wenigstens ein Seitenauslass ist, dass der zweite Luftführungskanal (19) einen Defrostkanal für die Luftbeaufschlagung von Fahrzeugscheiben (5, 7) bildet und dass der zweite Luftauslass (29, 30) wenigstens ein seitlicher Defrostauslass für eine Seitenscheibe (7) des Kraftfahrzeugs (1) ist.

3. Schalttafelanordnung nach Anspruch 1 oder 2, **dadurch gekennzeichnet, dass** der Defrostkanal (19) und der Belüftungskanal (18) in ihrem parallel zur Fahrzeugquerrichtung (Fq) verlaufenden Abschnitt (37) - in Fahrtrichtung (Fr) gesehen - hintereinander angeordnet sind, das sich an diesen Abschnitt (37) des Belüftungskanals (18) ein Bogenabschnitt (39) anschließt, der sich entgegen der Fahrtrichtung (Fr) erstreckt, und dass der Kanalfortsatz (40) in dem Bogenabschnitt (39) des Belüftungskanals (18) liegt.

4. Schalttafelanordnung nach Anspruch 1, **dadurch gekennzeichnet, dass** die Kanalwand (38) eine Luftdurchtrittsöffnung (42) aufweist, dass in dem ersten Luftführungskanal (18) ein Einlegeteil (43) angeordnet ist, welches in dem ersten Luftführungskanal (18) den Kanalfortsatz (40) des zweiten Luftführungskanals (19) bildet, und dass der Kanalfortsatz (40) an die Luftdurchtrittsöffnung (42) anschließt und in der zweiten Luftaustrittsöffnung (29, 30) mündet.

5. Schalttafelanordnung nach einem der vorhergehenden Ansprüche, **dadurch gekennzeichnet, dass** die Luftführungskanäle (18, 19) wenigstens abschnittsweise durch jeweils im Schalttafelunterteil (11) ausgebildete U-förmige Kanalelemente (20, 21) gebildet sind, die durch das Schalttafeloberteil (22) abgedeckt sind.

6. Schalttafelanordnung nach einem der vorhergehenden Ansprüche, **dadurch gekennzeichnet, dass** die in der Kanalwand (38) vorgesehene Luftdurchtrittsöffnung (42) etwa im Übergangsbereich zwischen dem parallel zur Fahrzeugquerrichtung verlaufenden Abschnitt (37) und dem Bogenabschnitt (39) liegt.

7. Schalttafelanordnung nach einem der vorhergehenden Ansprüche, **dadurch gekennzeichnet, dass** der seitliche Defrostauslass (29, 30) auf der Oberseite (23) und der Seitenauslass (27, 28) auf der dem Fahrgastraum (9) zugewandten Stirnseite (24) der Schalttafelanordnung (10) liegt.

## Claims

1. A dashboard arrangement for a motor vehicle, comprising a dashboard lower part and a dashboard upper part, between which a first and a second air duct are formed, which ducts at least partly extend approximately in the transverse vehicle direction and at least partly extend parallel to one another and are separated from each other by a duct wall and, in addition, lead at least to first and second air outlets arranged in the region of lateral ends of the dashboard arrangement, **characterised in that** the second air duct (19) upstream (arrow Pf) of the associated second air outlet (29, 30) is continued partly within the first air duct (18) with a duct extension (40).

2. A dashboard arrangement according to claim 1, **characterised in that** the first air duct (18) forms a ventilation duct for the interior (9) of the motor vehicle (1), **in that** the first air outlet (27, 28) is at least one lateral outlet, **in that** the second air duct (19) forms a defrost duct for acting upon vehicle windows (5, 7) with air, and **in that** the second air outlet (29, 30) is at least one lateral defrost outlet for a side window (7) of the motor vehicle (1).

3. A dashboard arrangement according to claim 1 or 2, **characterised in that** - seen in the direction of travel (Fr) - the defrost duct (19) and the ventilation duct (18) are arranged one behind the other in their portion (37) extending parallel to the transverse vehicle direction (Fq), **in that** a curved portion (39) adjoins this portion (37) of the ventilation duct (18) and extends counter to the direction of travel (Fr), and **in that** the duct extension (40) lies within the curved portion (39) of the ventilation duct (18).

4. A dashboard arrangement according to claim 1, **characterised in that** the duct wall (38) has an air passage opening (42), **in that** an insert (43) is arranged in the first air duct (18) and forms therein the duct extension (40) of the second air duct (19), and **in that** the duct extension (40) adjoins the air passage opening (42) and opens into the second air outlet opening (29, 30).

5. A dashboard arrangement according to any one of the preceding claims, **characterised in that** the air ducts (18, 19) are at least partly formed by U-shaped duct members (20, 21) which are each formed in the dashboard lower part (11) and are covered by the dashboard upper part (22).

6. A dashboard arrangement according to any one of the preceding claims, **characterised in that** the air passage opening (42) provided in the duct wall (38) lies approximately in the transition region between the portion (37), extending parallel to the transverse vehicle direction, and the curved portion (39).

7. A dashboard arrangement according to any one of the preceding claims, **characterised in that** the lateral defrost outlet (29, 30) is located on the upper side (23) of the dashboard arrangement (10), and the lateral outlet (27, 28) is located on the side (24) thereof facing the passenger compartment (9).

## Revendications

1. Agencement de tableau de bord pour un véhicule automobile qui comprend une partie inférieure et une partie supérieure entre lesquelles sont réalisés un premier ainsi qu'un deuxième canal de guidage d'air, lesquels canaux s'étendent au moins en partie à peu près dans la direction transversale du véhicule et s'étendent au moins par endroits parallèlement l'un à l'autre, et sont séparés l'un de l'autre par une paroi de canal et mènent en outre au moins vers des premières et deuxièmes sorties d'air disposées dans la zone d'extrémité latérale du tableau de bord, **caractérisé en ce que** le deuxième canal de guidage d'air (19) est prolongé en partie, en amont (flèche Pf) de la deuxième sortie d'air (29, 30) qui lui est associée, à l'intérieur du premier canal de guidage d'air (18), par un prolongement de canal (40).

2. Agencement de tableau de bord selon la revendication 1, **caractérisé en ce que** le premier canal de guidage d'air (18) forme un canal de ventilation pour l'habitacle (9) du véhicule automobile (1), **en ce que** la première sortie d'air (27, 28) est au moins une sortie latérale, **en ce que** le deuxième canal de guidage d'air (19) forme un canal de dégivrage pour l'action de l'air sur des vitres (5, 7) du véhicule, et **en ce que** la deuxième sortie d'air (29, 30) est au moins une sortie de dégivrage latérale pour une vitre latérale (7) du véhicule automobile (1).

3. Agencement de tableau de bord selon la revendication 1 ou 2, **caractérisé en ce que** le canal de dégivrage (19) et le canal de ventilation (8) sont disposés l'un derrière l'autre - vus dans le sens de marche (Fr) - dans leur segment (37) s'étendant parallèlement à la direction transversale (Fq) du véhicule, **en ce qu'**à ce segment (37) du canal de ventilation (18) se raccorde un segment courbe (39) qui s'étend dans le sens contraire au sens de marche (Fr), et **en ce que** le prolongement de canal (40) se situe dans le segment courbe (39) du canal de ventilation (18).

4. Agencement de tableau de bord selon la revendication 1, **caractérisé en ce que** la paroi de canal (38) présente une ouverture de passage d'air (42), **en ce que** dans le premier canal de guidage d'air (18) est disposé un insert (43) qui forme dans le premier canal de guidage d'air (18) le prolongement de canal (40) du deuxième canal de guidage d'air (19), et **en ce que** le prolongement de canal (40) se raccorde à l'ouverture de passage d'air (42) et débouche dans la deuxième ouverture de sortie d'air (29, 30).

5. Agencement de tableau de bord selon l'une des revendications précédentes, **caractérisé en ce que** les canaux de guidage d'air (18, 19) sont formés, au moins en partie, par des éléments de canal (20, 21) en U, réalisés chacun dans la partie inférieure (11) du tableau de bord, lesquels éléments sont recouverts par la partie supérieure (22) du tableau de bord.

6. Agencement de tableau de bord selon l'une des revendications précédentes, **caractérisé en ce que** l'ouverture de passage d'air (42), prévue dans la paroi de canal (38), se situe approximativement dans la zone de transition entre le segment (37), s'étendant parallèlement à la direction transversale du véhicule, et le segment courbe (39).

7. Agencement de tableau de bord selon l'une des revendications précédentes, **caractérisé en ce que** la sortie de dégivrage (29, 30) latérale se situe sur le côté supérieur (23), et la sortie latérale (27, 28) sur le côté frontal (24), tourné vers l'habitacle (9), de l'agencement de tableau de bord (10).
